# FASCICULE DE BREVET EUROPEEN

(11) **EP 3 490 815 B1**
(45) Date de publication et mention de la délivrance du brevet: **01.07.2020**
(21) Numéro de dépôt: 17745850.2
(22) Date de dépôt: 17.07.2017
(51) Int. Cl.: B60C 11/00

(54) **PNEUMATIQUE À SOUS-COUCHE DE BANDE DE ROULEMENT CONTENANT DES MATÉRIAUX MULTIPLES**
REIFEN MIT EINER LAUFFLÄCHENUNTERSCHICHT MIT MEHREREN MATERIALIEN
TYRE WITH A TREAD SUB-LAYER CONTAINING MULTIPLE MATERIALS

(30) Priorité: 26.07.2016 FR 1657167; 01.12.2016 FR 1661791
(43) Date de publication de la demande: 05.06.2019
(73) Titulaire: Compagnie Générale des Etablissements Michelin, 63000 Clermont-Ferrand (FR)
(72) Inventeur: PROST, Pascal, 63040 CLERMONT-FERRAND CEDEX 9 (FR); CAREME, Christopher, 63040 CLERMONT-FERRAND CEDEX 9 (FR); DEAN, David, 63040 CLERMONT-FERRAND CEDEX 9 (FR)
(74) Mandataire: Bauvir, Jacques
(86) Numéro de dépôt international: PCT/FR2017/051942
(87) Numéro de publication internationale: WO 2018/020103

(56) Documents cités:
- WO-A1-2014/005927
- FR-A1- 2 999 118
- FR-A1- 3 007 693

## Description

### Domaine de l'invention

La présente invention est relative aux pneumatiques, et plus particulièrement à un pneumatique dont les performances en matière de résistance au roulement et comportement routier sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial CP est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

### État de la technique

Comme on le sait, les pneumatiques pour applications routières, et tout particulièrement les pneumatiques pour véhicules de tourisme apportent une contribution essentielle aux performances des véhicules en matière de résistance ou roulement (et donc d'efficacité énergétique des véhicules), d'adhérence, de réponse dynamique pour le guidage des véhicules (notamment en virage) et d'usure (et donc de coût global d'utilisation des véhicules). Parmi les paramètres de conception des pneumatiques, l'homme du métier connait l'importance du choix du matériau constitutif de la bande de roulement et du matériau constitutif de la sous-couche. Un exemple de sous-couche, c'est-à-dire de couche de caoutchouc insérée entre l'armature de sommet et le matériau de la bande de roulement, est décrit dans le document FR 2 954 333. En général, on utilise des matériaux de sous-couche sous la bande de roulement de manière à améliorer la résistance au roulement du pneumatique avec un matériau peu hystérétique, ou encore pour rigidifier la bande de roulement en cisaillement, mais avec des rigidités modestes pour ne pas trop s'opposer à la mise à plat de la bande de roulement du pneumatique dans l'aire de contact avec le sol.

Cependant, plus la rigidité est faible, moins bonne est la réponse en poussée de dérive du pneumatique sur sollicitation de braquage du véhicule. En effet, de façon schématique, on peut considérer que l'empilage de couches de caoutchouc radialement à l'extérieur de l'armature de sommet comme une succession de ressorts en série. C'est pourquoi on évite d'introduire des matériaux de trop faible module pour ne pas pénaliser la rigidité de dérive. Or ceci peut être contraire à l'objectif de minimiser la résistance au roulement. Même dans les variantes de rigidités les plus élevées, le module dynamique de cisaillement G* d'un matériau de sous-couche est en général très inférieur à 8 MPa, même lorsque l'on recherche les meilleures performances en comportement. Dans le présent mémoire, précisons que le module dynamique de cisaillement G* considéré est le module dynamique de cisaillement G* mesuré à 23°C, et sous une contraite de cisaillement alterné à une fréquence de 10 Hz et à 10% de déformation.

Par le document WO 2015/170615, on connait aussi un pneumatique comportant une couche de base, c'est-à-dire une sous-couche, formée par deux matériaux superposés radialement. Le module du matériau de la bande de roulement et la valeur de tg δ (tangente delta) de celui-ci sont inférieurs aux valeurs des mêmes paramètres du matériau de sous-couche en contact avec le matériau de bande de roulement, c'est-à-dire de celle des deux couches la plus à l'extérieur radialement. Le module du matériau de la couche radialement intérieure des matériaux de sous-couche et la valeur de tg δ de celui-ci sont inférieurs aux valeurs des mêmes paramètres du matériau de sous-couche en contact avec le matériau de bande de roulement. Cependant, un pneumatique réalisé selon cet enseignement n'apporte pas de progrès dans l'équilibre de performances.

Par le document FR 2999118 A1, on connait aussi un pneumatique dont la bande de roulement (et non pas la sous-couche) est constituée par trois mélanges de caoutchouc différents, dans un but tout différent puisqu'il s'agit de résistivité électrique. Par le document WO 2014/005927 A1, on connait aussi un pneumatique dont la bande de roulement (et non pas la sous-couche) est constituée par deux mélanges de caoutchouc différents, dans un but tout différent puisqu'il s'agit de résistance aux agressions et à l'usure d'un pneumatique pour véhicules de type génie civil. Par le document FR 3007693 A1, on connait aussi un pneumatique dont la bande de roulement (et non pas la sous-couche) est constituée par deux mélanges de caoutchouc différents.

L'invention a pour objectif d'apporter une meilleure réponse dynamique en poussée de dérive sur sollicitation de braquage sans dégrader la résistance au roulement du pneumatique.

### Description brève de l'invention

L'invention a pour objet un pneumatique ayant un axe de rotation et un plan médian perpendiculaire à l'axe de rotation, et comprenant :
- une armature de sommet,
- une bande de roulement radialement à l'extérieur de l'armature de sommet, la bande de roulement s'étendant axialement entre deux épaules, la bande de roulement comprenant une face de contact destinée à venir en contact avec la chaussée pendant le roulage du pneumatique, la bande de roulement étant constituée par au moins un mélange caoutchouteux de rigidité M donnée, et
- une sous-couche disposée radialement extérieurement à l'armature de sommet et radialement intérieurement à la bande de roulement,
dans lequel, d'un côté au moins axialement par rapport au plan médian, la sous-couche comporte :
- une première couche de base disposée radialement sur l'armature de sommet et axialement entre le plan médian et un bord de transition, le bord de transition étant situé axialement entre le plan médian et une épaule, ladite première couche de base étant constituée par un mélange caoutchouteux de rigidité A donnée,
- une deuxième couche de base disposée radialement sur l'armature de sommet et axialement entre le bord de transition et une extrémité épaule, ladite deuxième couche de base étant constituée par un mélange caoutchouteux de rigidité B donnée,
- une couche de recouvrement disposée radialement sur la première couche de base et sur la deuxième couche de base et radialement à l'intérieur de la bande de roulement et axialement au moins en tronçons situés entre le plan médian et l'extrémité épaule, ladite couche de recouvrement étant constituée par un mélange caoutchouteux de rigidité C donnée,
- la rigidité B étant plus petite que la rigidité A qui est plus petite que la rigidité C, et la rigidité C est plus grande que la rigidité M.

Dans un mode de réalisation avantageux, la couche de recouvrement est continue axialement, d'une épaule du pneumatique à l'autre épaule. Dans un mode de réalisation préféré, la couche de recouvrement est formée de plusieurs tronçons séparés axialement, ladite couche de recouvrement étant interrompue sous les sillons, et la couche de recouvrement est, axialement en certains endroits, prolongée radialement vers l'extérieur par au moins un élément renforçant s'étendant radialement vers l'extérieur de la bande de roulement.

### Description des Figures

L'invention estmaintenant décrite à l'aide du dessin annexé dans lequel :
- la figure 1 montre une coupe méridienne schématique d'un pneumatique conforme à un premier mode de réalisation de l'invention ;
- la figure 2 montre une coupe méridienne schématique d'un pneumatique conforme à un deuxième mode de réalisation de l'invention ;
- la figure 3 est une représentation simplifiée d'un troisième de réalisation de l'invention ;
- la figure 4 montre une représentation simplifiée d'un quatrième mode de réalisation de l'invention ;
- la figure 5 est une représentation simplifiée d'un cinquième de réalisation de l'invention.

### Description détaillée de l'invention

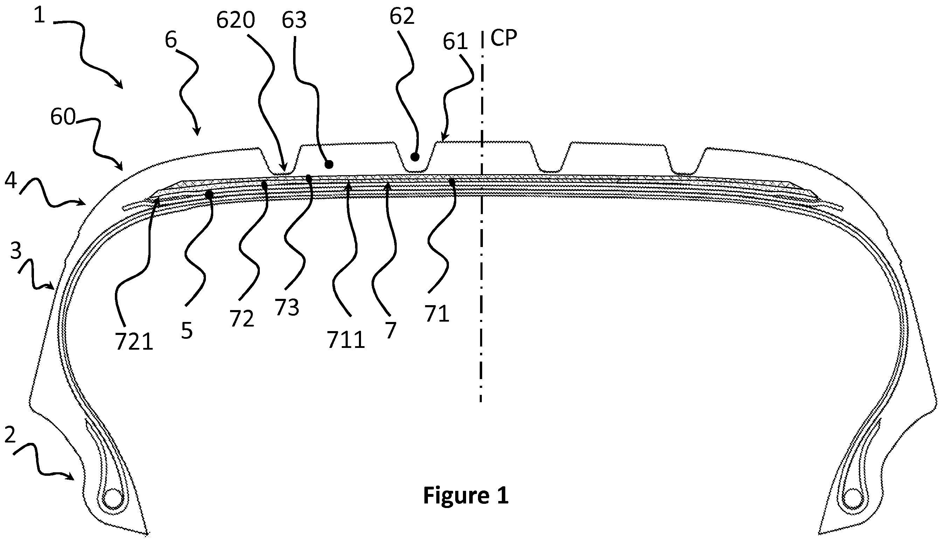

On voit à la figure 1 un pneumatique 1, un plan équatorial CP, deux bourrelets 2 et deux flancs 3 reliés chacun à un bourrelet 2. Le pneumatique comporte un sommet 4, qui comporte une armature de sommet 5 et une bande de roulement 6. La bande de roulement s'étend axialement d'une épaule 60 à l'autre épaule. La bande de roulement comprend une face de contact 61 destinée à venir en contact avec la chaussée pendant le roulage du pneumatique. La bande de roulement 6 comporte des blocs de sculpture 63 séparés par des sillons 62 orientés essentiellement circonférentiellement. Chaque sillon 62 est délimité radialement vers l'intérieur par un fond de sillon 620.

Le sommet comporte aussi une sous-couche 7 disposée radialement extérieurement à l'armature de sommet 5 et radialement intérieurement à la bande de roulement 6. Cette sous-couche est formée de trois parties : une première couche de base 71, une deuxième couche de base 72 et une couche de recouvrement 73.

La première couche de base 71 est disposée radialement directement sur l'armature de sommet 5. Comme connu en soi, l'armature de sommet comporte des couches de câbles ou de renforts mono-filamentaires en général enrobés d'une mince couche de caoutchouc. Dans le contexte de la présente invention, par la précision que la première couche de base 71 est disposée radialement directement sur l'armature de sommet 5, on indique qu'elle est en contact avec les câbles ou renforts, compte non tenu de leur enrobage de caoutchouc. On voit que la première couche de base 71 est disposée axialement entre le plan médian CP et un bord de transition 711 ; le bord de transition 711 est situé axialement entre le plan médian CP et une épaule 60 ; dans ce mode de réalisation, le bord de transition 711 est unique dans chacune des moitiés axiales de part et d'autre du plan CP.

On voit une deuxième couche de base 72 disposée radialement directement (voir remarque ci-dessus) sur l'armature de sommet 5 et axialement entre le bord de transition 711 et une extrémité épaule 721. On voit également une couche de recouvrement 73 disposée radialement sur la première couche de base 71 et sur la deuxième couche de base 72 et radialement à l'intérieur de la bande de roulement 6 et axialement au moins en tronçons situés entre le plan médian CP et l'extrémité épaule 60. Notons que, dans ce mode de réalisation, le matériau de la bande de roulement 6 apparait dans le fond de rainure 620 ; le matériau de la couche de recouvrement 73 est donc revêtu (radialement vers le haut) par un film de matériau de bande de roulement 6 d'épaisseur très faible.

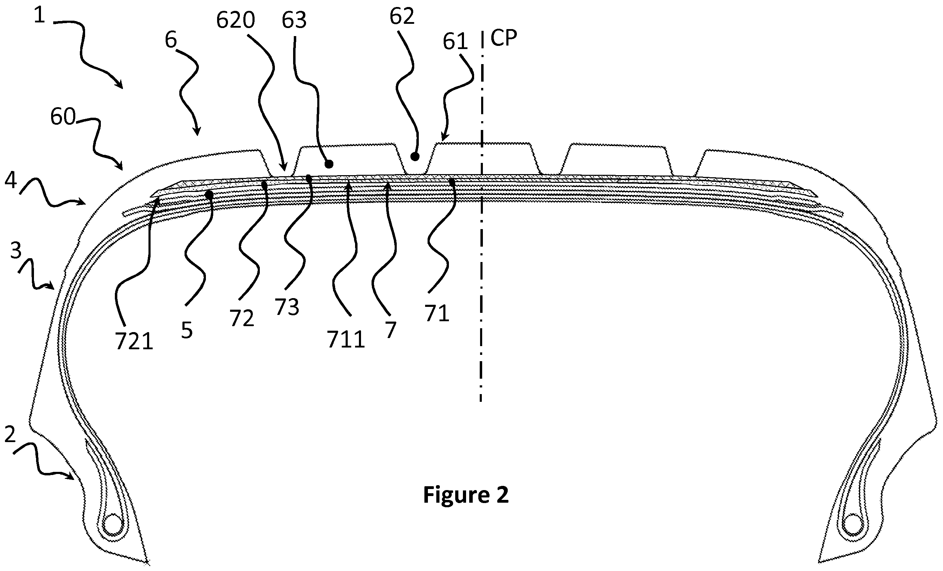

A la figure 2, on voit un deuxième mode de réalisation de l'invention très proche de celui illustré par la figure 1 : dans ce deuxième mode de réalisation, le matériau de la couche de recouvrement 73 apparait dans le fond de rainure 620.

Abordons maintenant les matériaux utilisés pour la sous-couche 7. Pour les caractériser, on utilise le module dynamique de cisaillement G* mesuré à 23°C, et sous une contrainte de cisaillement alterné à une fréquence de 10 Hz et à 10% de déformation.

De préférence, le matériau de la première couche de base 71 est caractérisé par un module dynamique de cisaillement G* compris entre 1,5 MPa et 2,5 MPa. Il s'agit de valeurs classiques pour des sous-couches de configuration usuelle, c'est-à-dire mono-matériau et s'étendant axialement d'une épaule à l'autre du pneumatique. De façon avantageuse, la valeur de tg δ mesurée à 23°C à 10 Hz et sous une déformation de cisaillement alterné de 10% du matériau de la première couche de base 71 est inférieure à 0,2.

De préférence, le matériau de la deuxième couche de base 72 est caractérisé par un module dynamique de cisaillement G* strictement inférieur à 1,5 MPa et de préférence inférieur à 0,5 MPa ; de façon très avantageuse, le module dynamique de cisaillement G* de ce matériau à une valeur de 0,3 MPa. De cette façon, on emploie un matériau ayant une hystérèse très faible pour diminuer la résistance au roulement du pneumatique. Cette hystérèse est appréciée par la valeur de tg δ mesurée à 23°C à 10 Hz et sous une déformation de cisaillement alterné de 10%. De préférence, cette valeur est inférieure à 0,3 et de façon très avantageuse, la valeur de tg δ est de l'ordre de 0,05. Ainsi, le module dynamique de cisaillement plus faible de ce matériau et sa plus faible tg δ permettent de réduire encore les pertes hystérétiques à la faveur d'une moindre résistance au roulement.

Quant à la couche de recouvrement 73, de préférence, son matériau est caractérisé par un module dynamique de cisaillement G* supérieur à 7 MPa et de préférence supérieur à 12 MPa ; de façon très avantageuse, le module dynamique de cisaillement G* de ce matériau à une valeur supérieure à 20 MPa. De cette façon, on parvient à une bonne rigidité de dérive et on obtient un excellent compromis de performances conciliant une poussée de dérive apte à procurer au pneumatique une bonne réponse dynamique et une excellente résistance au roulement. De façon avantageuse, la valeur de tg δ mesurée à 23°C à 10 Hz et sous une déformation de cisaillement alterné de 10% du matériau de la deuxième couche de base 72 est inférieure à 0,3.

Un exemple de formulation appropriée pour le matériau de la première couche de base 71, de module dynamique de cisaillement G* valant 2,0 MPa est le suivant :

**Tableau 1**

| composant | pce |
|---|---|
| NR | 60 |
| BR | 40 |
| N683 | 55 |
| 6PPD | 1,5 |
| Acide stéarique | 0,5 |
| CBS | 1,5 |
| soufre insol 20H | 3 |
| ZnO | 3 |

Les formulations sont données en masse (pce signifiant pourcentage de la masse d'élastomère)

Un exemple de formulation appropriée pour le matériau de la deuxième couche de base 72, de module dynamique de cisaillement G* valant 0,2 MPa est le suivant :

**Tableau 2**

| composant | pce |
|---|---|
| NR | 100 |
| Noir de carbonne | 4 |
| 6PPD | 2,2 |
| DPG | 2,1 |
| Acide Stearique | 3 |
| ZnO | 1,5 |
| Résine | 29,3 |
| HTO | 38 |
| CBS | 1,4 |
| Soufre | 1,6 |

Les formulations sont données en masse (pce signifiant pourcentage de la masse d'élastomère).

Un exemple de formulation appropriée pour le matériau de la couche de recouvrement 73 de module dynamique de cisaillement G* valant 25 MPa est le suivant :

**Tableau 3**

| Composant | pce |
|---|---|
| NR | 100 |
| Noir de Carbone | 70 |
| Résine Formophénolique | 12 |
| ZnO | 3 |
| Acide stearique | 2 |
| 6PPD | 2,5 |
| HMT | 4 |
| Soufre | 3 |
| CBS | 2 |

Les formulations sont données en masse (pce signifiant pourcentage de la masse d'élastomère).

Quant au matériau de la bande de roulement, selon l'invention, sa rigidité M est inférieure à la rigidité C de la couche de recouvrement. Avantageusement, le mélange caoutchouteux a un module dynamique de cisaillement G* inférieur à 4,0 MPa et préférentiellement inférieur à 2,5 MPa. A titre d'exemple, le matériau de la bande de roulement est le même que le matériau de la première couche de base 71, dont module dynamique de cisaillement G* vaut 2,0 MPa.

Le tableau 4 suivant donne un exemple de formulation de bande de roulement :

**Tableau 4**

| Composant | pce |
|---|---|
| SBR (a) | 100 |
| Silice (b) | 110 |
| Agent de couplage (c) | 9 |
| Plastifiant liquide (d) | 20 |
| Plastifiant résine (e) | 50 |
| Noir | 5 |
| Oxyde de zinc | 3 |
| Acide stéarique | 2 |
| Antioxydant (f) | 2 |
| Accélérateur (g) | 2 |
| DPG | 2 |
| Soufre | 1 |

Les formulations sont données en masse (pce signifiant pourcentage de la masse d'élastomère), avec :
(a) SBR avec 27% styrène, butadiène -1,2 :5%, cis-1,4 : 15%, trans -1,4: 80% Tg -48°C
(b) Silice « Zeosil1165MP » de la société Solvay de surface BET 160m²/g
(c) Silane TESPT « SI69 » de la société Evonik
(d) Huile TDAE « Flexon 630 » de la société Shell
(e) Résine « Escorez 2173 » de la société Exxon
(f) Antioxydant « Santoflex 6PPD » de la société Solutia
(g) Accélérateur « Santocure CBS » de la société Solutia

L'homme du métier, concepteur de pneumatiques, pourra adopter des variantes de réalisations dans lesquelles la bande de roulement elle-même comporte plusieurs matériaux différents, superposés radialement et/ou juxtaposés axialement.

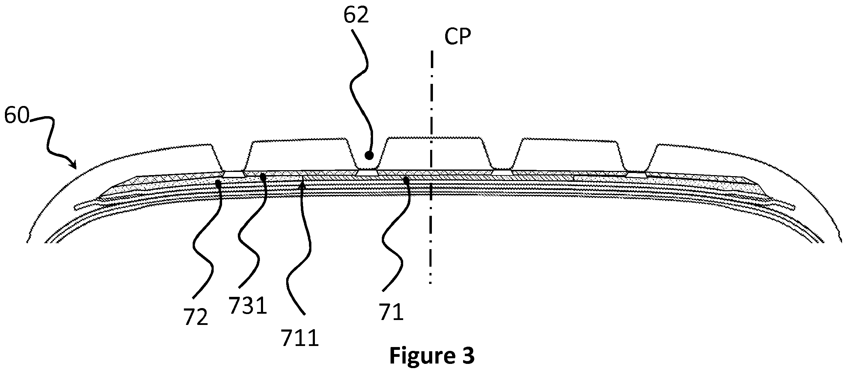

Dans le mode de réalisation de l'invention illustré par les figures 1 et 2, la couche de recouvrement 73 est continue axialement entre les deux épaules 60. A la figure 3, on voit un troisième mode de réalisation dans laquelle une couche de recouvrement 731 est formée de plusieurs tronçons séparés axialement, ladite couche de recouvrement étant interrompue sous les sillons 62. A l'endroit de l'interruption, le matériau apparaissant au fond de sillon 620 est le même que le matériau de la bande de roulement 6. Au global, ce mode de réalisation permet d'améliorer significativement la résistance au roulement au prix d'une très modeste dégradation de la rigidité de dérive.

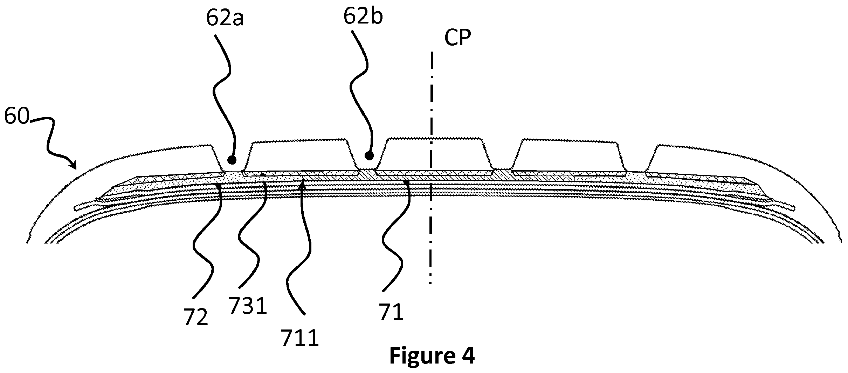

A la figure 4 est illustré un quatrième mode de réalisation de l'invention très proche de celui illustré par la figure 3 : dans ce quatrième mode de réalisation, à l'endroit de l'interruption, le matériau apparaissant au fond de sillon 620 est le même que le matériau celle de la première (71) ou deuxième (72) couche de base située radialement en dessous du sillon considéré ; ainsi, on voit que le matériau de la deuxième couche de base 72 apparait au fond du sillon 62a et le matériau de la première couche de base 71 apparait au fond du sillon 62b.

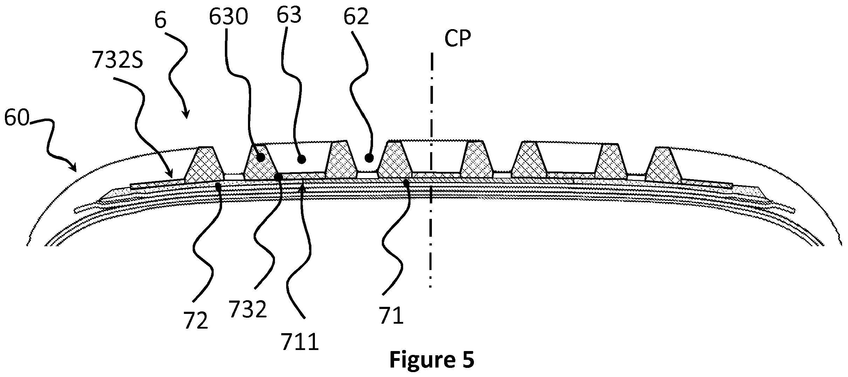

Afin d'améliorer la résistance au roulement et de gagner en même temps en rigidité de dérive, on peut utiliser dans la partie usante de la bande de roulement, des éléments 630 en forme de coin. A la figure 5, est illustrée un cinquième mode de réalisation dans laquelle une couche de recouvrement 732, axialement au niveau de certains blocs de sculpture 63, est prolongée radialement vers l'extérieur par un élément renforçant 630 en forme de coin (vu en coupe méridienne). Cet élément renforçant 630 s'étend radialement de la surface radialement extérieure 732S de la couche de recouvrement 732 vers l'extérieur de la bande de roulement 6 jusqu'à une hauteur radiale supérieure à 75% de l'épaisseur radiale de la bande de roulement. Ledit élément renforçant 630 est de largeur axiale variable, depuis une valeur maximale inférieure à 50% de la largeur axiale dudit bloc de sculpture, ladite largeur axiale allant en décroissant lorsque l'on se déplace radialement vers le haut. L'angle formé en section radiale par les deux parois latérales dudit élément renforçant 630 est de préférence compris entre 10° et 50° degrés, soit par exemple 40°, comme illustré à la figure 3. La bande de roulement comporte un tel élément renforçant 630 de part et d'autre de chaque sillon 62. Chaque élément renforçant est avantageusement constitué du même mélange caoutchouteux que la couche de recouvrement 732, ce qui permet de les extruder en une seule et même opération avec la couche de recouvrement 732.

### Essais

On a utilisé comme témoin un pneumatique R ayant une bande de roulement réalisée avec un mélange dont le module dynamique de cisaillement G* vaut 3,0 MPa, et une sous-couche mono-matériau, allant axialement d'une épaule à l'autre du pneumatique, et d'épaisseur radialement sensiblement constante ; vue en section radiale, le profil de cette sous-couche est le même que le profil de l'ensemble de la première couche de base 71 ; cette sous-couche est formée par un mélange présentant un module dynamique de cisaillement G* vallant 2,0 MPa. Un premier pneumatique de test T1 est conforme à l'exemple de l'invention illustré avec la figure 1, et utilisant les matériaux illustrés aux tableaux 1 à 4. Un deuxième pneumatique de test T2 est conforme à l'exemple de l'invention illustré avec la figure 3 (couche de recouvrement 731 interrompue), et utilisant les matériaux illustrés aux tableaux 1 à 4. Un troisième pneumatique de test T3 est conforme à l'exemple de l'invention illustré avec la figure 5 (cet exemple cumule le fait d'avoir une couche de recouvrement interrompue et d'avoir des élément renforçants 630 de part et d'autre de chaque sillon 62, ces deux aspects de réalisation pouvant être utilisés indépendemment l'un de l'autre), et utilisant les matériaux illustrés aux tableaux 1 à 4. Les valeurs de résistances au roulement (kg/T) et de rigidité de dérive Dz (N/°) sont ramenées en base 100 pour le témoin R et exprimées en valeur relative par rapport à la base 100 pour les pneumatiques selon l'invention. La mesure de rigidité de dérive d'un pneumatique permet d'évaluer le comportement routier d'un véhicule par sa capacité à réagir lors d'une sollicitation au volant ou à prendre la trajectoire d'un virage. Cette rigidité de dérive est mesurée sur appareillage et consiste à faire rouler un pneumatique monté sur jante et gonflé à une pression nominale sur une bande métallique adhérisée, au moyen d'une machine de type « Flat Track ». La mesure s'effectue lorsque le pneumatique roule à 80km/h avec un enchainement de sollicitations faisant varier les conditions de charge, de dérive et de carrossage. La résistance au roulement peut être mesurée conformément à la norme ISO28580.

**Tableau 5**

| | Rigidité de dérive (par rapport à une base 100) | Résistance au roulement (par rapport à une base 100) |
|---|---|---|
| Pneumatique R | 100% | 100% |
| Pneumatique T1 (Figure 1) | 92% | 109% |
| Pneumatique T2 (Figure 3) | 87% | 109% |
| Pneumatique T3 (Figure 5) | 121% | 112% |

On note que l'invention permet un déplacement du compromis de performances entre résistance au roulement et rigidité de dérive ; elle permet une amélioration très significative de la résistance au roulement au prix d'une baisse de la rigidité de dérive tout à fait acceptable pour des applications à des véhicule de tourisme où la performance recherchée est surtout le confort de roulage. Et on note qu'en adoptant le cinquième mode de réalisation, on atteint un gain très important à la fois en résistance au roulement et en rigidité de dérive.

## Revendications

1. Pneumatique (1) ayant un axe de rotation et un plan médian (CP) perpendiculaire à l'axe de rotation, comprenant :
• une armature de sommet (5),
• une bande de roulement (6) radialement à l'extérieur de l'armature de sommet (5), la bande de roulement (6) s'étendant axialement entre deux épaules (60), la bande de roulement comprenant une face de contact (61) destinée à venir en contact avec la chaussée pendant le roulage du pneumatique, la bande de roulement (6) étant constituée par au moins un mélange caoutchouteux de module dynamique de cisaillement M donné, et
• une sous-couche (7) disposée radialement extérieurement à l'armature de sommet (5) et radialement intérieurement à la bande de roulement (6),
**caractérisé en ce que,** d'un côté au moins axialement par rapport au plan médian (CP), la sous-couche (7) comporte :
• une première couche de base (71) disposée radialement sur l'armature de sommet (5) et axialement entre le plan médian (CP) et un bord de transition (711), le bord de transition (711) étant situé axialement entre le plan médian (CP) et une épaule (60), ladite première couche de base (71) étant constituée par un mélange caoutchouteux de module dynamique de cisaillement A donné,
• une deuxième couche de base (72) disposée radialement sur l'armature de sommet (5) et axialement entre le bord de transition (711) et une extrémité épaule (721), ladite deuxième couche de base (72) étant constituée par un mélange caoutchouteux de module dynamique de cisaillement B donné,
• une couche de recouvrement (73) disposée radialement sur la première couche de base (71) et sur la deuxième couche de base (72) et radialement à l'intérieur de la bande de roulement (6) et axialement au moins en tronçons situés entre le plan médian (CP) et l'extrémité épaule (721), ladite couche de recouvrement (73) étant constituée par un mélange caoutchouteux de module dynamique de cisaillement C donné,
• le module dynamique de cisaillement B étant plus petit que le module dynamique de cisaillement A qui est plus petit que le module dynamique de cisaillement C, et le module dynamique de cisaillement C est plus grand que le le module dynamique de cisaillement M,
chaque module dynamique de cisaillement A, B, C et M étant mesuré à 23°C, et sous une contrainte de cisaillement alterné à une fréquence de 10 Hz et à 10% de déformation.

2. Pneumatique (1) selon la revendication 1, **caractérisé en ce que** le module dynamique de cisaillement A du matériau de la première couche de base (71) est compris entre 1,5 MPa et 2,5 MPa.

3. Pneumatique (1) selon la revendication 2, **caractérisé en ce que** la valeur de tg δ mesurée à 23°C à 10 Hz et sous une déformation de cisaillement alterné de 10% du matériau de la première couche de base (71) est inférieure à 0,2.

4. Pneumatique (1) selon la revendication 1 ou 2, **caractérisé en ce que** le module dynamique de cisaillement B du matériau de la deuxième couche de base (72) est strictement inférieur à 1,5 MPa.

5. Pneumatique (1) selon la revendication 4, **caractérisé en ce que** le module dynamique de cisaillement B du matériau de la deuxième couche de base (72) est inférieur à 0,5 MPa.

6. Pneumatique (1) selon la revendication 4 ou 5, **caractérisé en ce que** la valeur de tg δ mesurée à 23°C à 10 Hz et sous une déformation de cisaillement alterné de 10% du matériau de la deuxième couche de base (72) est inférieure à 0,3.

7. Pneumatique (1) selon l'une des revendications 1, 2 ou 4, **caractérisé en ce que** le module dynamique de cisaillement C du matériau de la couche de recouvrement (73) est strictement supérieur à 7 MPa.

8. Pneumatique (1) selon la revendication 7, **caractérisé en ce que** le module dynamique de cisaillement C du matériau de la couche de recouvrement (73) est strictement supérieur à 12 MPa.

9. Pneumatique (1) selon la revendication 7 ou 8, **caractérisé en ce que** la valeur de tg δ mesurée à 23°C à 10 Hz et sous une déformation de cisaillement alterné de 10% du matériau de la deuxième couche de base (72) est inférieure à 0,3.

10. Pneumatique (1) selon l'une des revendications 1 à 9, dans lequel la bande de roulement (6) comporte des sillons (62) orientés essentiellement circonférentiellement, **caractérisé en ce que** la couche de recouvrement (73) est formée de plusieurs tronçons séparés axialement, ladite couche de recouvrement (73) étant interrompue sous les sillons (62).

11. Pneumatique (1) selon l'une des revendications 1 à 9, **caractérisé en ce que** la couche de recouvrement (73) est continue axialement entre les deux épaules (60).

12. Pneumatique (1) selon l'une quelconque des revendications précédentes, **caractérisé en ce que** le module dynamique de cisaillement M du matériau de la bande de roulement est inférieur à 4,0 MPa.

13. Pneumatique (1) selon l'une des revendications précédentes, dans lequel la bande de roulement (6) comporte des blocs de sculpture (63) séparés par des sillons (62) orientés essentiellement circonférentiellement, **caractérisé en ce que** la couche de recouvrement (732) est, axialement en regard de certains blocs de sculpture (63), prolongée radialement vers l'extérieur par au moins un élément renforçant (630) s'étendant radialement de la surface radialement extérieure (732S) de la couche de recouvrement (732) vers l'extérieur de la bande de roulement (6) jusqu'à une hauteur radiale supérieure à 75% de l'épaisseur radiale de la bande de roulement (6), ledit élément renforçant (630) étant de largeur axiale variable, depuis une valeur maximale inférieure à 50% de la largeur axiale dudit bloc de sculpture (63), ladite largeur axiale allant en décroissant lorsque l'on se déplace radialement vers l'extérieur.

## Patentansprüche

1. Luftreifen (1), der eine Rotationsachse und eine senkrecht zur Rotationsachse verlaufende Medianebene (CP) aufweist, umfassend:
• eine Scheitelbewehrung (5),
• einen Laufstreifen (6) radial außerhalb der Scheitelbewehrung (5), wobei sich der Laufstreifen (6) axial zwischen zwei Schultern (60) erstreckt, wobei der Laufstreifen eine Kontaktfläche (61) umfasst, die dazu ausgestaltet ist, während des Rollens des Luftreifens mit der Fahrbahn in Kontakt zu gelangen, wobei der Laufstreifen (6) aus mindestens einer Kautschukmischung mit einem gegebenen dynamischen Schermodul M besteht, und
• eine Unterschicht (7), die radial außerhalb der Scheitelbewehrung (5) und radial innerhalb des Laufstreifens (6) angeordnet ist,
**dadurch gekennzeichnet, dass** die Unterschicht (7) zumindest auf einer Seite axial in Bezug auf die Medianebene (CP) beinhaltet:
• eine erste Basisschicht (71), die radial auf der Scheitelbewehrung (5) und axial zwischen der Medianebene (CP) und einem Übergangsrand (711) angeordnet ist, wobei der Übergangsrand (711) axial zwischen der Medianebene (CP) und einer Schulter (60) gelegen ist, wobei die erste Basisschicht (71) aus einer Kautschukmischung mit einem gegebenen dynamischen Schermodul A besteht,
• eine zweite Basisschicht (72), die radial auf der Scheitelbewehrung (5) und axial zwischen dem Übergangsrand (711) und einem Schulterende (721) angeordnet ist, wobei die zweite Basisschicht (72) aus einer Kautschukmischung mit einem gegebenen dynamischen Schermodul B besteht,
• eine Deckschicht (73), die radial auf der ersten Basisschicht (71) und auf der zweiten Basisschicht (72) und radial innerhalb des Laufstreifens (6) und axial zumindest abschnittsweise zwischen der Medianebene (CP) und dem Schulterende (721) gelegen ist, wobei die Deckschicht (73) aus einer Kautschukmischung mit einem gegebenen dynamischen Schermodul C besteht,
• wobei der dynamische Schermodul B kleiner als der dynamische Schermodul A ist, der kleiner als der dynamische Schermodul C ist, und der dynamische Schermodul C größer als der dynamische Schermodul M ist, wobei jeder dynamische Schermodul A, B, C und M bei 23 °C und unter einer Scherwechselbeanspruchung mit einer Frequenz von 10 Hz und bei 10 % Verformung gemessen wird.

2. Luftreifen (1) nach Anspruch 1, **dadurch gekennzeichnet, dass** der dynamische Schermodul A des Materials der ersten Basisschicht (71) zwischen 1,5 MPa und 2,5 MPa beträgt.

3. Luftreifen (1) nach Anspruch 2, **dadurch gekennzeichnet, dass** der Wert von tg δ des Materials der ersten Basisschicht (71), gemessen bei 23 °C bei 10 Hz und unter einer Scherwechselverformung von 10 %, kleiner als 0,2 ist.

4. Luftreifen (1) nach Anspruch 1 oder 2, **dadurch gekennzeichnet, dass** der dynamische Schermodul B des Materials der zweiten Basisschicht (72) strikt kleiner als 1,5 MPa ist.

5. Luftreifen (1) nach Anspruch 4, **dadurch gekennzeichnet, dass** der dynamische Schermodul B des Materials der zweiten Basisschicht (72) kleiner als 0,5 MPa ist.

6. Luftreifen (1) nach Anspruch 4 oder 5, **dadurch gekennzeichnet, dass** der Wert von tg δ des Materials der zweiten Basisschicht (72), gemessen bei 23 °C bei 10 Hz und unter einer Scherwechselverformung von 10 %, kleiner als 0,3 ist.

7. Luftreifen (1) nach einem der Ansprüche 1, 2 oder 4, **dadurch gekennzeichnet, dass** der dynamische Schermodul C des Materials der Deckschicht (73) strikt größer als 7 MPa ist.

8. Luftreifen (1) nach Anspruch 7, **dadurch gekennzeichnet, dass** der dynamische Schermodul C des Materials der Deckschicht (73) strikt größer als 12 MPa ist.

9. Luftreifen (1) nach Anspruch 7 oder 8, **dadurch gekennzeichnet, dass** der Wert von tg δ des Materials der zweiten Basisschicht (72), gemessen bei 23 °C bei 10 Hz und unter einer Scherwechselverformung von 10 %, kleiner als 0,3 ist.

10. Luftreifen (1) nach einem der Ansprüche 1 bis 9, bei dem der Laufstreifen (6) im Wesentlichen umfänglich ausgerichtete Rillen (62) beinhaltet, **dadurch gekennzeichnet, dass** die Deckschicht (73) aus mehreren axial getrennten Abschnitten gebildet wird, wobei die Deckschicht (73) unter den Rillen (62) unterbrochen ist.

11. Luftreifen (1) nach einem der Ansprüche 1 bis 9, **dadurch gekennzeichnet, dass** die Deckschicht (73) zwischen den beiden Schultern (60) axial durchgängig ist.

12. Luftreifen (1) nach einem der vorhergehenden Ansprüche, **dadurch gekennzeichnet, dass** der dynamische Schermodul M des Materials des Laufstreifens kleiner als 4,0 MPa ist.

13. Luftreifen (1) nach einem der vorhergehenden Ansprüche, bei dem der Laufstreifen (6) Profilblöcke (63) beinhaltet, die durch im Wesentlichen umfänglich ausgerichtete Rillen (62) getrennt sind, **dadurch gekennzeichnet, dass** die Deckschicht (732) axial gegenüber einigen Profilblöcken (63) radial nach außen durch mindestens ein verstärkendes Element (630) verlängert ist, das sich radial von der radial äußeren Oberfläche (732S) der Deckschicht (732) nach außerhalb des Laufstreifens (6) bis in eine radiale Höhe von mehr als 75 % der radialen Dicke des Laufstreifens (6) erstreckt, wobei das verstärkende Element (630) eine variable axiale Breite ausgehend von einem Höchstwert von weniger als 50 % der axialen Breite des Profilblocks (63) hat, wobei die axiale Breite radial nach außen hin abnimmt.

## Claims

1. Tyre (1) having an axis of rotation and a median plane (CP) perpendicular to the axis of rotation, comprising:
• a crown reinforcement (5),
• a tread (6) radially on the outside of the crown reinforcement (5), the tread (6) extending axially between two shoulders (60), the tread comprising a contact face (61) intended to come into contact with the roadway when the tyre is being driven on, the tread (6) being made up of at least one rubber compound of given dynamic shear modulus M, and
• a sub-layer (7) disposed radially on the outside of the crown reinforcement (5) and radially on the inside of the tread (6),
**characterized in that,** at least on one side axially with respect to the median plane (CP), the sub-layer (7) has:
• a first base layer (71) disposed radially on the crown reinforcement (5) and axially between the median plane (CP) and a transition edge (711), the transition edge (711) being situated axially between the median plane (CP) and a shoulder (60), said first base layer (71) being made up of a rubber compound of given dynamic shear modulus A,
• a second base layer (72) disposed radially on the crown reinforcement (5) and axially between the transition edge (711) and a shoulder end (721), said second base layer (72) being made up of a rubber compound of given dynamic shear modulus B,
• a covering layer (73) disposed radially on the first base layer (71) and on the second base layer (72) and radially on the inside of the tread (6) and axially at least in portions situated between the median plane (CP) and the shoulder end (721), said covering layer (73) being made up of a rubber compound of given dynamic shear modulus C,
• the dynamic shear modulus B being less than the dynamic shear modulus A, which is less than the dynamic shear modulus C, and the dynamic shear modulus C being greater than the dynamic shear modulus M,
each dynamic shear modulus 1, B, C and M being measured at 23°C at 10 Hz and under an alternating shear deformation of 10%.

2. Tyre (1) according to Claim 1, **characterized in that** the dynamic shear modulus A of the material of the first base layer (71) is between 1.5 MPa and 2.5 MPa.

3. Tyre (1) according to Claim 2, **characterized in that** the tg δ value measured at 23°C at 10 Hz and under an alternating shear deformation of 10% of the material of the first base layer (71) is less than 0.2.

4. Tyre (1) according to Claim 1 or 2, **characterized in that** the dynamic shear modulus B of the material of the second base layer (72) is strictly less than 1.5 MPa.

5. Tyre (1) according to Claim 4, **characterized in that** the dynamic shear modulus B of the material of the second base layer (72) is less than 0.5 MPa.

6. Tyre (1) according to Claim 4 or 5, **characterized in that** the tg δ value measured at 23°C at 10 Hz and under an alternating shear deformation of 10% of the material of the second base layer (72) is less than 0.3.

7. Tyre (1) according to one of Claims 1, 2 and 4, **characterized in that** the dynamic shear modulus C of the material of the covering layer (73) is strictly greater than 7 MPa.

8. Tyre (1) according to Claim 7, **characterized in that** the dynamic shear modulus C of the material of the covering layer (73) is strictly greater than 12 MPa.

9. Tyre (1) according to Claim 7 or 8, **characterized in that** the tg δ value measured at 23°C at 10 Hz and under an alternating shear deformation of 10% of the material of the second base layer (72) is less than 0.3.

10. Tyre (1) according to one of Claims 1 to 9, wherein the tread (6) has furrows (62) oriented substantially circumferentially, **characterized in that** the covering layer (73) is formed by several portions that are separated axially, said covering layer (73) being interrupted under the furrows (62).

11. Tyre (1) according to one of Claims 1 to 9, **characterized in that** the covering layer (73) is axially continuous between the two shoulders (60).

12. Tyre (1) according to any of the preceeding claims, **characterized in that** the dynamic shear modulus M of the rubber compound of the tread is less that 4.0 MPa.

13. Tyre (1) according to one of the preceeding claims, wherein the tread (6) has tread blocks (63) that are separated by furrows (62) oriented substantially circumferentially, **characterized in that** the covering layer (732), axially next to some tread blocks (63), is extended radially outwards by at least one reinforcing element (630) extending radially from the radially outer surface (732S) of the covering layer (732) towards the outside of the tread (6) to a radial height greater than 75% of the radial thickness of the tread (6), said reinforcing element (630) having a variable axial width, from a maximum value less than 50% of the axial width of said tread block (63), said axial width decreasing radially externally.
